# EUROPEAN PATENT SPECIFICATION

(11) **EP 3 636 530 B1**
(45) Date of publication and mention of the grant of the patent: **13.01.2021**
(21) Application number: 19201049.4
(22) Date of filing: 02.10.2019
(51) Int. Cl.: B62K 5/08

(54) **STRADDLED VEHICLE**
GRÄTSCHSITZFAHRZEUG
VÉHICULE À ENFOURCHER

(30) Priority: 12.10.2018 CN 201811186758
(43) Date of publication of application: 15.04.2020
(73) Proprietor: Yamaha Hatsudoki Kabushiki Kaisha, Iwata-shi, Shizuoka 438-8501 (JP)
(72) Inventor: PENG, Zheng-Zhi, Taoyuan City, 320 (CN)
(74) Representative: Grünecker Patent- und Rechtsanwälte PartG mbB

(56) References cited:
- WO-A1-2010/013482
- US-A1- 2015 166 139

## Description

### TECHNICAL FIELD

The present invention relates to a straddled vehicle.

### BACKGROUND ART

A straddled vehicle includes a body frame made of a pipe.

Document WO2010/013482 A1 shows the preamble of claim 1.

For example, a straddled vehicle disclosed in a known example (TW201022079) includes a head pipe, a down frame, and a lower frame portion. The down frame extends downward from the head pipe. The lower frame portion includes a left lower frame and a right lower frame. A foot board is disposed between the left lower frame and the right lower frame. A fuel tank is disposed below the foot board. A fuel supply pipe is provided so as to extend upward from the fuel tank.

The left lower frame includes a left connection end connected to the left side of the down frame. The right lower frame includes a right connection end connected to the right side of the down frame. In the vehicle rear view, the left connection end is disposed higher than the right connection end.

The left lower frame includes a first left frame and a second left frame. The first left frame extends rearward and leftward from the down frame. The second left frame extends rearward from the first left frame. The right lower frame includes a first right frame and a second right frame. The first right frame extends rearward and rightward from the down frame. The second right frame extends rearward from the first right frame.

In the known example, the first left frame and the first right frame are connected to the down frame at different heights. In the vehicle plan view, the angle between the vehicle center line and the higher one of the first left frame and the first right frame is larger than the angle between the vehicle center line and the lower one of the first left frame and the first right frame. Specifically, the second left frame is disposed higher than the second right frame in a vehicle side view. In the vehicle plan view, the angle between the first left frame and the vehicle center line is larger than the angle between the first right frame and the vehicle center line. Thus, it is described that the rigidity between the down frame and the left and right lower frames is improved, and the down frame is restrained from swinging in the longitudinal direction of the vehicle with respect to the left and right lower frames.

### SUMMARY OF THE INVENTION

### Technical Problems

As described above, in the known example, in order to improve the rigidity of the down frame, the first left frame is disposed higher than the first right frame. Therefore, the fuel supply pipe is disposed so as to pass below the first left frame, and extends upward through the front of the first left frame.

However, a front wheel is disposed in front of the fuel supply pipe. In order to ensure the distance between the fuel supply pipe and the front wheel, the front wheel is disposed away from the fuel supply pipe in the front. Therefore, as described above, when the fuel supply pipe is disposed through the front of the first left frame, the vehicle is enlarged in the longitudinal direction of the vehicle.

### Solution to Problems

Here, the inventor of the present invention studied to arrange the fuel supply pipe so as to pass above the first left frame in order to prevent the vehicle from becoming large in the longitudinal direction. In such an arrangement, the fuel supply pipe can be arranged without passing through the front of the first left frame. Thereby, the distance between the fuel supply pipe and the front wheel can be secured without increasing the size of the vehicle in the longitudinal direction.

However, in order to secure a distance between the fuel tank and the ground, the fuel supply pipe, the first left frame, and the fuel tank cannot be moved downward. Further, the foot board is disposed above the upper edge of the fuel supply pipe. For this reason, when the fuel supply pipe is disposed so as to pass above the first left frame, the vertical distance between the foot board and the seat is reduced due to an increase in the position of the foot board.

Accordingly, the inventor has considered to reverse the arrangement of the heights of the first left frame and the first right frame from the known example. In that case, the first left frame is disposed lower than the first right frame. Accordingly, the height of the foot board can be kept low even if the fuel supply pipe is disposed so as to pass above the first left frame. Thereby, it is possible to prevent the vehicle from increasing in size in the longitudinal direction while ensuring a vertical distance between the foot board and the seat.

However, as in the known example, in the case that the angle between the vehicle center line and the higher one of the first left frame and the first right frame is larger than the angle between the vehicle center line and the lower one of the first left frame and the first right frame in the vehicle plan view, the angle between the first right frame and the vehicle center line is larger than the angle between the first left frame and the vehicle center line in the vehicle plan view if the first left frame is arranged lower than the first right frame. In other words, in the vehicle plan view, the angle between the first left frame and the vehicle center line is smaller than the angle between the first right frame and the vehicle center line. Therefore, if the first left frame is disposed lower than the first right frame, the inlet of the fuel tank disposed behind the first left frame needs to be moved rearward. In this case, the foot board disposed above the fuel tank becomes smaller in the longitudinal direction, so that the driver's leg comfort is reduced.

Here, the inventor has conceived the following configuration in order to suppress the foot board from becoming smaller in the longitudinal direction. The left lower frame includes a first left frame extending leftward from the down frame and a second left frame extending rearward from the first left frame. With this configuration, the inlet of the fuel tank can be moved forward. Thereby, even if the fuel supply pipe is arranged so as to pass above the first left frame, it can suppress that a foot board becomes small in the longitudinal direction, and can ensure a driver's leg comfort.

However, in the above-described configuration, the left lower frame is bent between the first left frame and the second left frame. In that case, the rigidity between the down frame and the left lower frame is lower than in the configuration in which the left lower frame is linear. For this reason, the effect of suppressing the swing of the down frame in the longitudinal direction of the vehicle is reduced. The inventor has earnestly studied in order to effectively suppress the swing of the down frame while improving the driver's leg comfort, and as a result, has obtained the following knowledge.

The inventor thought that the swing of the down frame can be effectively suppressed as a whole vehicle by increasing the effect of suppressing the swing of the down frame by the right lower frame even when the rigidity of the left lower frame is lowered. Further, when the vehicle travels, the force received by the front wheel is transmitted to the upper portion of the down frame. Therefore, as the right lower frame moves further away from the upper portion of the down frame, the right lower frame can share larger force transmitted to the upper portion of the down frame.

Therefore, the inventor has conceived a configuration in which the upper edge of the second left frame and the upper edge of the second right frame are both lower than the upper edge of the fuel tank, higher than the lower edge of the fuel tank, rearward of the front edge of the fuel tank, and forward of the rear edge of the fuel tank. In this configuration, the second right frame is disposed lower than the first right frame. Therefore, the force transmitted to the upper portion of the down frame can be more largely shared by the right lower frame. In addition, since the upper edge of the second left frame and the upper edge of the second right frame are both disposed lower than the upper edge of the fuel tank, the position of the foot board can be lowered. Therefore, the vertical distance between the foot board and the seat can be increased. Thereby, the swing of the down frame can be suppressed while improving the driver's leg comfort.

The configuration of the present invention based on the above knowledge is as follows.

A straddled vehicle according to an aspect of the present invention includes a front wheel, a front fork, a head pipe, a down frame, a left lower frame, a right lower frame, a foot board, a fuel tank, and a fuel supply pipe. The front fork supports the front wheel. The head pipe supports the front fork. The down frame extends downward from the head pipe. The left lower frame includes a first left frame extending leftward from the down frame and a second left frame extending rearward from the first left frame. The right lower frame includes a first right frame extending rightward from the down frame and a second right frame extending rearward from the first right frame. At least a part of the foot board is disposed between the second left frame and the second right frame in the vehicle plan view. The fuel tank includes an inlet disposed leftward of the vehicle center line extending in the longitudinal direction of the vehicle and rearward of the front edge of the first left frame in a vehicle side view. The fuel tank is disposed below the foot board. The fuel supply pipe is connected to the inlet of the fuel tank.

In the vehicle side view, the fuel supply pipe passes above the upper edge of the first left frame. The first left frame includes a left connection end connected to the down frame. The first right frame includes a right connection end connected to the down frame. The upper end of the left connection end is located lower than the lower end of the right connection end in the vehicle rear view. In the vehicle rear view, the angle between the right edge of the down frame and the upper edge of the first right frame is larger than the angle between the left edge of the down frame and the upper edge of the first left frame. In the vehicle side view, the upper edge of the second left frame is located lower than the upper edge of the fuel tank, higher than the lower edge of the fuel tank, rearward of the front edge of the fuel tank, and forward of the rear edge of the fuel tank. In the vehicle side view, the upper edge of the second right frame is located lower than the upper edge of the fuel tank, higher than the lower edge of the fuel tank, rearward of the front edge of the fuel tank, and forward of the rear edge of the fuel tank. In the vehicle side view, the second right frame overlaps at least a part of the second left frame.

According to the straddled vehicle according to the present aspect, since the fuel supply pipe passes above the upper edge of the first left frame, the fuel supply pipe is arranged without passing through the front of the first left frame. Therefore, the fuel supply pipe can be arranged rearward as compared with the case where the fuel supply pipe passes in front of the first left frame. Thereby, the distance between the fuel supply pipe and the front wheel can be secured while suppressing the vehicle from becoming large in the longitudinal direction of the vehicle.

In the vehicle rear view, the upper end of the left connection end is positioned lower than the lower end of the right connection end. Therefore, the left and right connection ends are arranged apart in the vertical direction. Thereby, it is possible to suppress the down frame from swinging back and forth with respect to the left and right lower frames.

The first left frame extends leftward from the down frame. Therefore, as compared with the case where the first left frame extends obliquely rearward and leftward from the down frame, the inlet of the fuel tank disposed rearward of the front edge of the first left frame can be disposed further forward. Thereby, the foot board can be enlarged in the longitudinal direction, and leg comfort can be improved.

In the vehicle rear view, the angle between the right edge of the down frame and the upper edge of the first right frame is larger than the angle between the left edge of the down frame and the upper edge of the first left frame. Therefore, even when the right connection end is disposed higher than the left connection end, the second right frame can be disposed at a low position in the same manner as the second left frame. The upper edge of the second left frame and the upper edge of the second right frame are disposed lower than the upper edge of the fuel tank, higher than the lower edge of the fuel tank, rearward of the front edge of the fuel tank, and forward of the rear edge of the fuel tank. In addition, in the vehicle side view, the second right frame overlaps at least a part of the second left frame. Thereby, compared with the case where the upper edge of the second right frame is disposed higher than the upper edge of the fuel tank, the force transmitted to the upper portion of the down frame can be more largely shared by the second right frame. Thereby, the swing of the down frame can be suppressed. Further, since the position of the foot board can be lowered, the leg comfort can be further improved.

In the vehicle side view, at least a part of the second left frame and the second right frame may overlap the front edge and the rear edge of the fuel tank. In this case, since the wide range of the second right frame is arranged at a low position, a larger force can be shared by the second right frame.

In the vehicle rear view, the right lower frame may include an extension portion that extends upward from the upper end of the right connection end. In this case, the extension portion can further improve the rigidity between the right lower frame and the down frame.

The tube wall thickness of the left lower frame may be greater than the tube wall thickness of the right lower frame. In this case, the swing of the down frame can be further suppressed by increasing the rigidity of the left lower frame.

In the vehicle side view, at least a part of the inlet of the fuel tank may overlap the second left frame and the second right frame. In this case, since the second left frame and the second right frame are both arranged at low positions, the swing of the down frame can be suppressed.

The fuel tank may include a tank body, a front mounting portion, and a rear mounting portion. The front mounting portion may be disposed in front of the tank body. The rear mounting portion may be disposed behind the tank body. In this case, since the fuel tank is attached at the front and rear portions, the force transmitted to the down frame can be shared by the fuel tank. Thereby, the swing of the down frame can be suppressed.

In the vehicle side view, the rear edge of the fuel supply pipe may be located rearward of the front edge of the down frame. In this case, the distance between the fuel supply pipe and the front wheel can be secured without increasing the size of the vehicle in the longitudinal direction.

The straddled vehicle may further include a left reinforcing portion. The left reinforcing portion may be connected to the left lower frame and the down frame, and at least a part thereof may be disposed below the first left frame. In this case, the left reinforcing portion increases the rigidity of the left lower frame, so that the swinging of the down frame can be further suppressed.

The straddled vehicle may further include a right reinforcing portion. The right reinforcing portion may be connected to the right lower frame and the down frame, and at least a part thereof may be disposed below the first right frame. In this case, the right reinforcing portion increases the rigidity of the right lower frame, and thus the swinging of the down frame can be further suppressed.

The left connection end may be located at the same height as the second left frame. In this case, the position of the fuel supply pipe passing above the first left frame can be made lower than when the left connection end is positioned higher than the second left frame. Thereby, the foot board can be enlarged in the longitudinal direction, and leg comfort can be improved.

The left connection end may be positioned lower than the upper edge of the fuel tank. In this case, the position of the fuel supply pipe passing above the first left frame can be made lower than when the left connection end is positioned higher than the upper edge of the fuel tank. Thereby, the foot board can be enlarged in the longitudinal direction, and leg comfort can be improved.

### Advantageous Effects of Invention

According to the present invention, the swing of the down frame can be effectively suppressed while suppressing the vehicle from increasing in size in the longitudinal direction and improving the driver's leg comfort.

### BRIEF DESCRIPTION OF THE DRAWINGS

FIG. 1 is a side view of a straddled vehicle according to an embodiment.
FIG. 2 is a top view of the straddled vehicle.
FIG. 3 is a perspective view of a vehicle body frame and a fuel tank.
FIG. 4 is a perspective view of the vehicle body frame and the fuel tank.
FIG. 5 is a side view of the vehicle body frame and the fuel tank.
FIG. 6 is an enlarged top view of the vehicle body frame.
FIG. 7 is a sectional view taken along line VII-VII in FIG 5.
FIG. 8 is an enlarged side view of the fuel tank and the vehicle body frame.
FIG. 9 is an enlarged top view of the fuel tank and the vehicle body frame.

### DESCRIPTION OF EMBODIMENTS

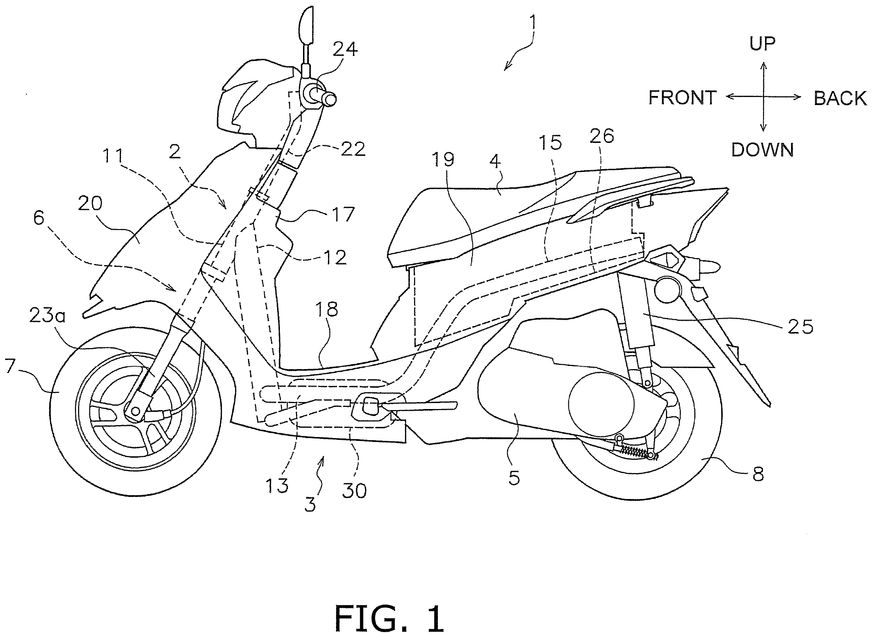

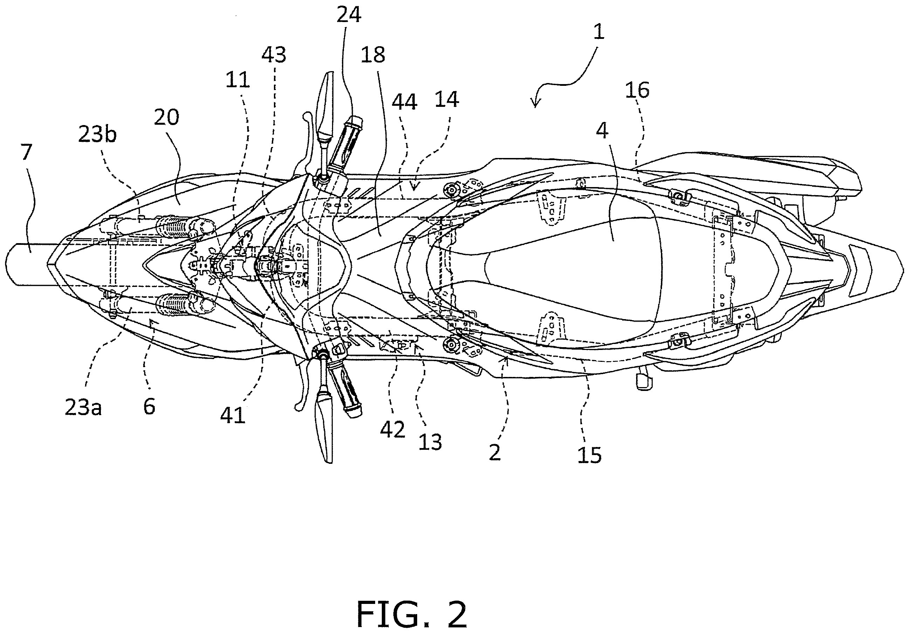

Hereinafter, a straddled vehicle 1 according to an embodiment will be described with reference to the drawings. FIG. 1 is a side view of the straddled vehicle 1 according to the embodiment. FIG. 2 is a top view of the straddled vehicle 1. The straddled vehicle 1 according to the present embodiment is a scooter type motorcycle. As illustrated in FIG. 1, the straddled vehicle 1 includes a vehicle body frame 2, a vehicle body cover 3, a seat 4, an engine unit 5, a front fork 6, a front wheel 7, and a rear wheel 8.

The vehicle body frame 2 includes a head pipe 11 and a down frame 12. The head pipe 11 and the down frame 12 are pipe-shaped members. The head pipe 11 is disposed at the vehicle center in the vehicle width direction. The head pipe 11 extends forward and downward. The down frame 12 is connected to the head pipe 11. The down frame 12 extends downward from the head pipe 11.

As illustrated in FIG. 2, the vehicle body frame 2 includes a left lower frame 13, a right lower frame 14, a left rear frame 15, and a right rear frame 16. The left lower frame 13 is connected to the down frame 12. The left rear frame 15 is connected to the left lower frame 13. The left rear frame 15 extends rearward and upward from the left lower frame 13. The right lower frame 14 is connected to the down frame 12. The right rear frame 16 is connected to the right lower frame 14. The right rear frame 16 extends rearward and upward from the right lower frame 14.

The front-rear and left-right directions refer to directions as viewed from the driver seated on the seat 4. "Connection" is not limited to direct connection, but also includes indirect connection. Further, "connection" is not limited to the case where separate members are fixed to each other, but also includes that a plurality of portions are continuous in an integrated member.

The front fork 6 is rotatably supported by the head pipe 11. The front fork 6 rotatably supports the front wheel 7. As illustrated in FIG. 1, the front fork 6 includes a steering shaft 22, left and right suspensions 23a and 23b, and a handle member 24. The steering shaft 22 is inserted into the head pipe 11 and extends forward and downward. The handle member 24 is connected to the upper end of the steering shaft 22. The left and right suspensions 23a and 23b extend forward and downward. The left and right suspensions 23a and 23b rotatably support the front wheel 7.

The seat 4 is disposed above the engine unit 5. The seat 4 is disposed above the left rear frame 15 and the right rear frame 16 in a vehicle side view. A storage portion 26 is disposed below the seat 4. The storage portion 26 can store articles such as a helmet.

The engine unit 5 is supported so as to be swingable with respect to the vehicle body frame 2. The engine unit 5 includes, for example, an engine and a transmission. The rear portion of the engine unit 5 supports the rear wheel 8 in a rotatable manner. The engine unit 5 is supported by left and right rear frames 15 and 16 via a rear suspension 15. The rear wheel 8 swings integrally with the engine unit 5. The rear wheel 8 is disposed below the seat 4.

The vehicle body cover 3 includes a front cover 20, a leg shield 17, a foot board 18, and a rear cover 19. The front cover 20 is disposed in front of the head pipe 11 and the down frame 12. The leg shield 17 is disposed behind the front cover 20. The leg shield 17 covers the head pipe 11 and the down frame 12 from behind. The rear cover 19 covers the left and right rear frames 15 and 16. The rear cover 19 is disposed below the seat 4.

The foot board 18 is disposed in front of and below the seat 4. The foot board 18 is disposed between the leg shield 17 and the rear cover 19. The foot board 18 has a flat shape in the vehicle width direction. However, the foot board 18 may have a shape in which a central portion in the vehicle width direction protrudes upward.

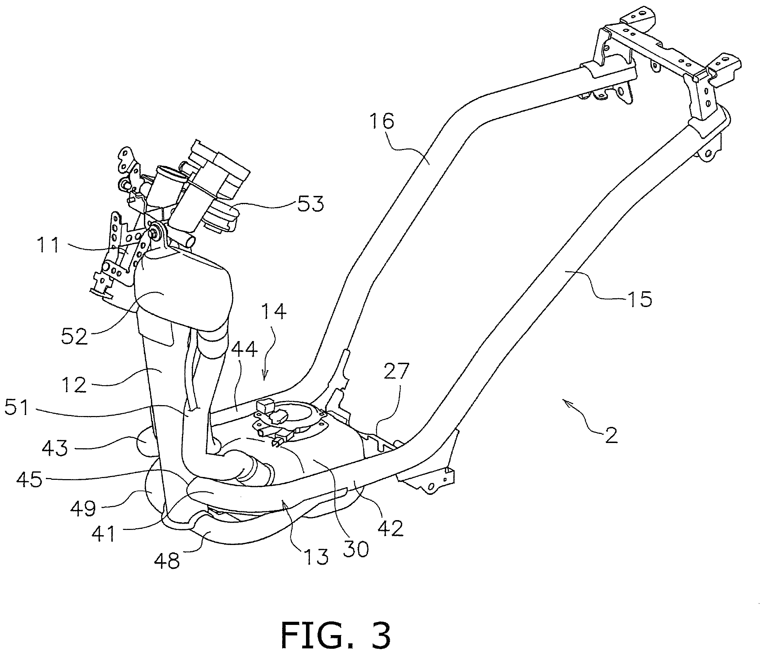

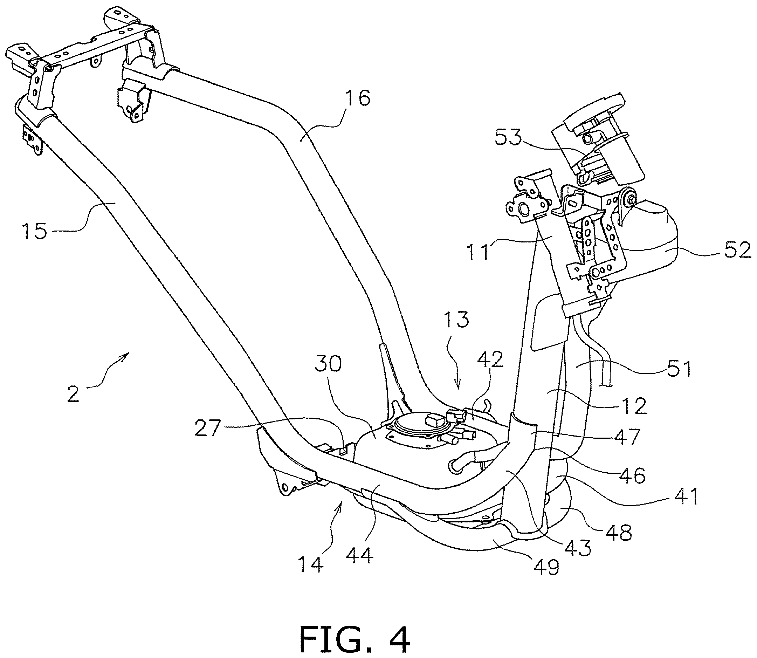

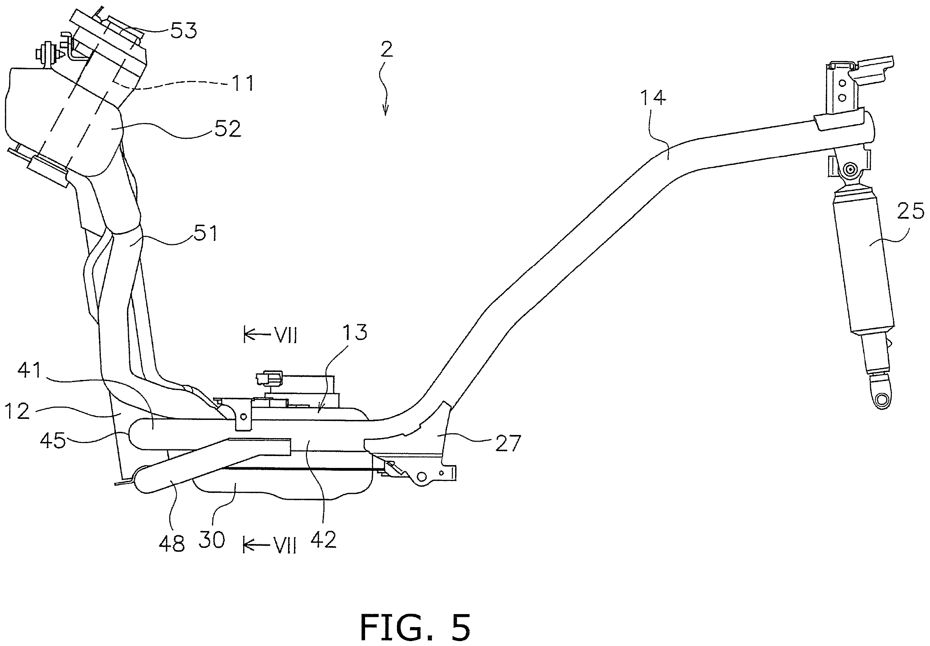

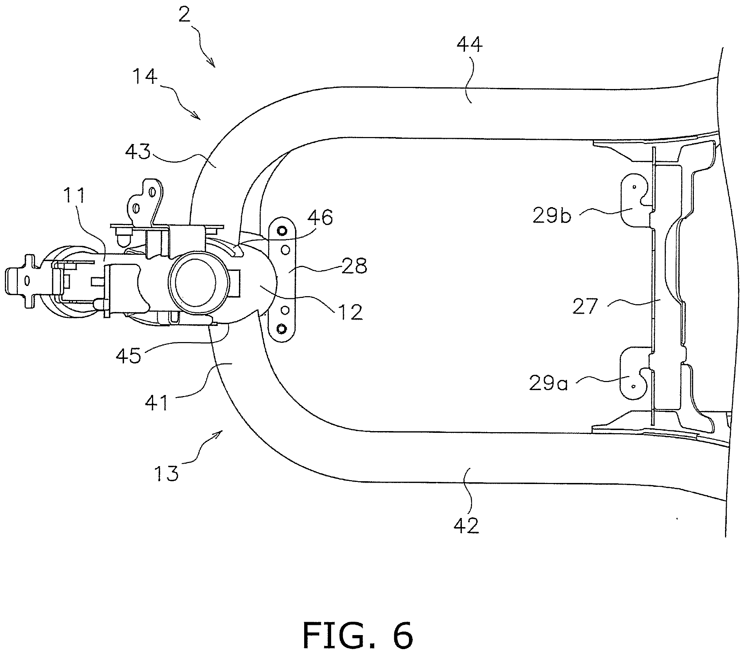

The straddled vehicle 1 includes a fuel tank 30. FIG. 3 and FIG. 4 are perspective views of the vehicle body frame 2 and the fuel tank 30. FIG. 5 is a vehicle side view of the vehicle body frame 2 and the fuel tank 30. FIG. 6 is an enlarged top view of the vehicle body frame 2. As illustrated in FIGS. 3 to 6, the left lower frame 13 includes a first left frame 41 and a second left frame 42. The first left frame 41 extends leftward from the down frame 12. The second left frame 42 extends rearward from the first left frame 41. The second left frame 42 is connected to the left rear frame 15. The left lower frame 13 has a shape bent between the first left frame 41 and the second left frame 42.

The right lower frame 14 includes a first right frame 43 and a second right frame 44. The first right frame 43 extends rightward from the down frame 12. The second right frame 44 extends rearward from the first right frame 43. The second right frame 44 is connected to the right rear frame 16. The right lower frame 14 has a shape bent between the first right frame 43 and the second right frame 44.

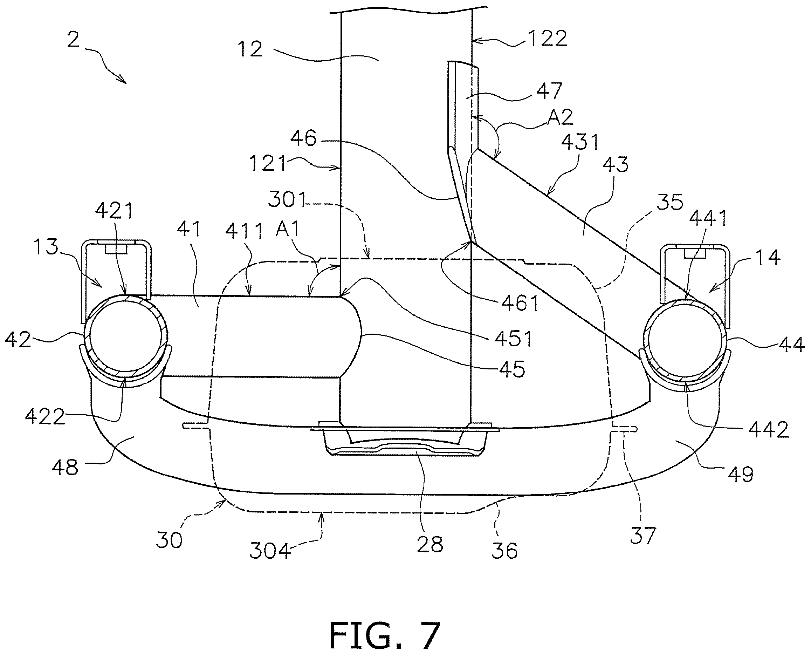

FIG. 7 is a sectional view taken along line VII-VII in FIG. 5. As illustrated in FIG. 7, the left lower frame 13 and the right lower frame 14 are pipe-shaped members. The tube wall thickness of the left lower frame 13 is larger than the tube wall thickness of the right lower frame 14.

In the vehicle rear view, the first left frame 41 extends horizontally or substantially horizontally from the down frame 12. In the vehicle rear view, the first right frame 43 extends from the down frame 12 in a direction inclined downward with respect to the horizontal direction. The angle A2 between the right edge 122 of the down frame 12 and the upper edge 431 of the first right frame 43 is larger than the angle A1 between the left edge 121 of the down frame 12 and the upper edge 411 of the first left frame 41 in the vehicle rear view.

The first left frame 41 includes a left connection end 45. The first left frame 41 is connected to the down frame 12 at the left connection end 45. The left connection end 45 is located at the same height as the second left frame 42. The first right frame 43 includes a right connection end 46. The first right frame 43 is connected to the down frame 12 at the right connection end 46. The right connection end 46 is located higher than the second right frame 44.

The upper end 451 of the left connection end 45 is located lower than the lower end 461 of the right connection end 46 in the vehicle rear view. In FIG. 7, a broken line 30 indicates the position of the fuel tank 30. As illustrated in FIG. 7, the left connection end 45 is located lower than the upper edge 301 of the fuel tank 30. Specifically, the upper end 451 of the left connection end 45 is located lower than the upper edge 301 of the fuel tank 30. The right connection end 46 is located higher than the upper edge 301 of the fuel tank 30. Specifically, the lower end 461 of the right connection end 46 is located higher than the upper edge 301 of the fuel tank 30.

The right lower frame 14 includes an extension portion 47. The extension portion 47 extends upward from the upper end of the right connection end 46 in the vehicle rear view. The first right frame 43 is connected to the down frame 12 at the right connection end 46 and the extension portion 47.

As illustrated in FIG. 2, at least a part of the foot board 18 is disposed between the second left frame 42 and the second right frame 44 in the vehicle plan view. The foot board 18 overlaps the second left frame 42 and the second right frame 44 in the vehicle plan view. The fuel tank 30 is disposed below the foot board 18. The fuel tank 30 is disposed between the second left frame 42 and the second right frame 44 in the vehicle width direction.

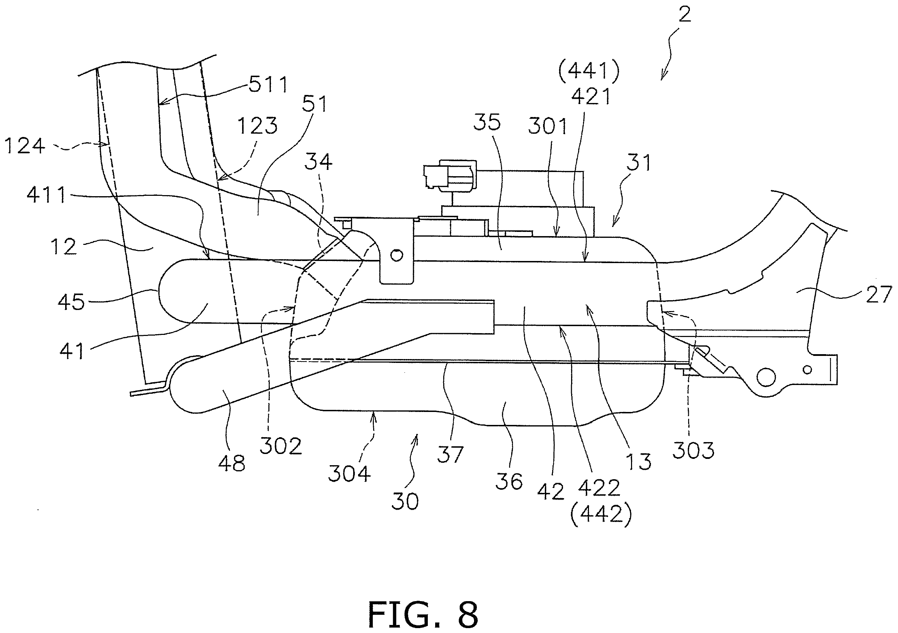

FIG. 8 is an enlarged side view of the fuel tank 30 and the vehicle body frame 2. As illustrated in FIGS. 7 and 8, the second left frame 42 and the second right frame 44 are disposed at the same or substantially the same height. The upper edge 441 of the second right frame 44 is located at the same or substantially the same height as the upper edge 421 of the second left frame 42. The lower edge 442 of the second right frame 44 is located at the same or substantially the same height as the lower edge 422 of the second left frame 42. The second right frame 44 overlaps at least a part of the second left frame 42 in the vehicle side view.

The fuel tank 30 includes a tank body 31 and an inlet 34. The tank body 31 has a space for storing fuel therein. The tank body 31 includes a first tank body 35, a second tank body 36, and a flange 37. The first tank body 35 is located above the flange 37. The second tank body 36 is located below the flange 37. The flange 37 protrudes from the first tank body 35 and the second tank body 36 in the horizontal direction. The flange 37 is arranged around the front, rear, left and right of the tank body 31. The inlet 34 is connected to the tank body 31. The inlet 34 protrudes forward and upward from the tank body 31.

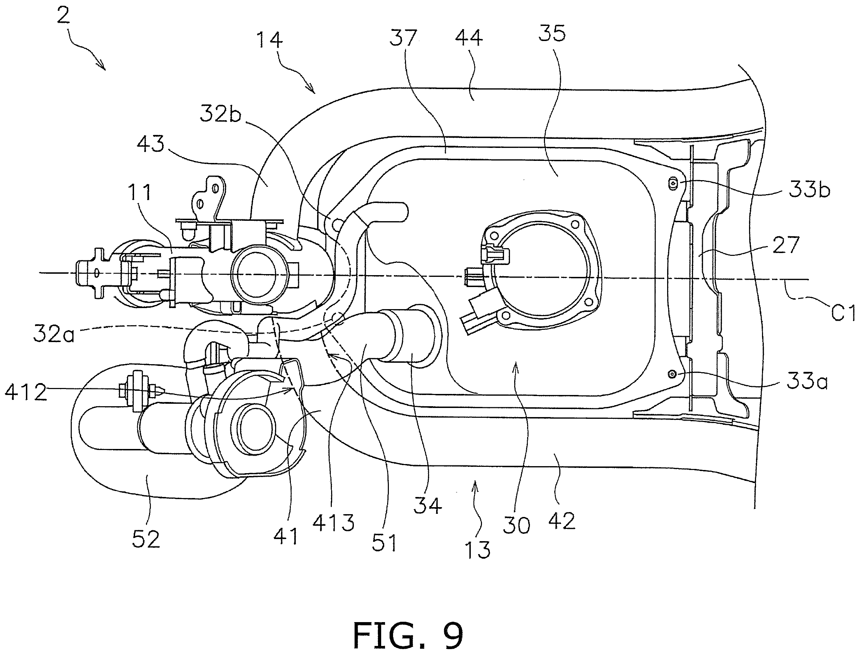

FIG. 9 is an enlarged top view of the fuel tank 30 and the vehicle body frame 2. As illustrated in FIG. 9, the fuel tank 30 includes front mounting portions 32a and 32b and rear mounting portions 33a and 33b. The front mounting portions 32a and 32b are disposed in front of the tank body 31. The rear mounting portions 33a and 33b are disposed behind the tank body 31. The front mounting portions 32a and 32b and the rear mounting portions 33a and 33b are provided on the flange 37.

As illustrated in FIG. 6, the vehicle body frame 2 includes a front tank bracket 28 and rear tank brackets 29a and 29b. The front tank bracket 28 is connected to the lower portion of the down frame 12. The front mounting portions 32a and 32b of the fuel tank 30 are attached to the front tank bracket 28. The rear tank brackets 29a and 29b are connected to the cross member 27. The cross member 27 extends in the vehicle width direction and is connected to the left lower frame 13 and the right lower frame 14. The rear mounting portions 33a and 33b of the fuel tank 30 are attached to the rear tank brackets 29a and 29b.

As illustrated in FIG. 9, the inlet 34 is arranged on the left side of the vehicle center line C1 extending in the longitudinal direction of the vehicle. The inlet 34 is disposed behind the first left frame 41. The inlet 34 is disposed behind the front edge 412 of the first left frame 41. The inlet 34 is disposed behind the rear edge 413 of the first left frame 41.

As illustrated in FIG. 8, at least a part of the inlet 34 of the fuel tank 30 overlaps the second left frame 42 and the second right frame 44 in the vehicle side view. At least a part of the inlet 34 of the fuel tank 30 is located lower than the upper edge 421 of the second left frame 42 and the upper edge 441 of the second right frame 44 in the vehicle side view. At least a part of the inlet 34 of the fuel tank 30 is located higher than the lower edge 422 of the second left frame 42 and the lower edge 442 of the second right frame 44 in the vehicle side view. In the vehicle side view, at least a part of the inlet 34 of the fuel tank 30 is located behind the rear edge 123 of the down frame 12. Specifically, the front end of the inlet 34 of the fuel tank 30 is located rearward of the rear edge 123 of the down frame 12 in the vehicle side view.

A fuel supply pipe 51 is connected to the inlet 34 of the fuel tank 30. The fuel supply pipe 51 passes above the upper edge 411 of the first left frame 41 in the vehicle side view. The fuel supply pipe 51 passes through the side of the down frame 12 and extends upward along the down frame 12. At least a part of the fuel supply pipe 51 overlaps the down frame 12 in the vehicle side view. The rear edge 511 of the fuel supply pipe 51 is located rearward of the front edge 124 of the down frame 12 in the vehicle side view.

As illustrated in FIG. 5, the straddled vehicle 1 includes a sub tank 52 and a fuel filler 53. The fuel supply pipe 51 is connected to the sub tank 52. The fuel filler 53 is connected to the sub tank 52. The sub tank 52 and the fuel filler 53 are disposed on the lateral side of the head pipe 11. The fuel filler 53 is attached to the leg shield 17.

As illustrated in FIG. 7, at least a part of the second left frame 42 overlaps the front edge 302 and the rear edge 303 of the fuel tank 30 in the vehicle side view. Similar to the second left frame 42, at least a part of the second right frame 44 overlaps the front edge 302 and the rear edge 303 of the fuel tank 30 in the vehicle side view.

In the vehicle side view, the upper edge 421 of the second left frame 42 located lower than the upper edge 301 of the fuel tank 30, higher than the lower edge 304 of the fuel tank 30, rearward of the front edge 302 of the fuel tank 30, and forward of the rear edge 303 of the fuel tank 30. Similar to the second left frame 42, the upper edge 441 of the second right frame 44 is located lower than the upper edge 301 of the fuel tank 30, higher than the lower edge 304 of the fuel tank 30, rearward of the front edge 302 of the tank 30, and forward of the rear edge 303 of the fuel tank 30.

The vehicle body frame 2 includes a left reinforcing portion 48 and a right reinforcing portion 49. The left reinforcing portion 48 is connected to the left lower frame 13 and the down frame 12. Specifically, the left reinforcing portion 48 is connected to the bottom portion of the left lower frame 13 and the lower end of the down frame 12. At least a part of the left reinforcing portion 48 is disposed below the first left frame 41. The right reinforcing portion 49 is connected to the right lower frame 14 and the down frame 12. Specifically, the right reinforcing portion 49 is connected to the bottom portion of the right lower frame 14 and the lower end of the down frame 12. At least a part of the right reinforcing portion 49 is disposed below the first right frame 43. In the present embodiment, the left reinforcing portion 48 and the right reinforcing portion 49 are integral pipe-like members and are disposed so as to pass below the lower end of the down frame 12.

According to the straddled vehicle 1 according to the present embodiment described above, since the fuel supply pipe 51 passes above the upper edge 411 of the first left frame 41, the fuel supply pipe 51 can be arranged without passing through the front of the first left frame 41. Therefore, the fuel supply pipe 51 can be disposed rearward as compared with the case where the fuel supply pipe 51 passes through the front of the first left frame 41. Thereby, the distance between the fuel supply pipe 51 and the front wheel 7 can be secured while suppressing the straddled vehicle 1 from being enlarged in the longitudinal direction.

The upper end 451 of the left connection end 45 is located lower than the lower end 461 of the right connection end 46 in the vehicle rear view. Accordingly, the left and right connection ends 45 and 46 are arranged apart in the vertical direction. Thereby, it is possible to suppress the down frame 12 from swinging forward and backward with respect to the left and right lower frames 13 and 14.

The first left frame 41 extends leftward from the down frame 12. Therefore, compared with the case where the first left frame 41 extends rearward and leftward from the down frame 12, the inlet 34 of the fuel tank 30 disposed rearward of the front edge 412 of the first left frame 41 can be placed more forward. Thereby, the foot board 18 can be enlarged in the longitudinal direction, and the leg comfort can be improved.

The angle A2 between the right edge 122 of the down frame 12 and the upper edge 431 of the first right frame 43 in the vehicle rear view is greater than the angle A1 between the left edge 121 of the down frame 12 and the upper edge 411 of the first left frame 41. Therefore, even if the right connection end 46 is disposed higher than the left connection end 45, the second right frame 44 can be disposed at a low position in the same manner as the second left frame 42. The upper edge 421 of the second left frame 42 and the upper edge 441 of the second right frame 44 are arranged lower than the upper edge 301 of the fuel tank 30, higher than the lower edge 304 of the fuel tank 30, rearward of the front edge 302 of the fuel tank 30, and forward of the rear edge 303 of the fuel tank 30. Further, the second right frame 44 overlaps at least a part of the second left frame 42 in the vehicle side view. Thereby, compared with the case where the upper edge 441 of the second right frame 44 is disposed higher than the upper edge 301 of the fuel tank 30, the force transmitted to the upper portion of the down frame 12 is more largely shared by the second right frame 44. Thereby, the swing of the down frame 12 can be suppressed. Moreover, since the position of the foot board 18 can be lowered, the leg comfort can be further improved.

In the vehicle side view, at least a part of the second left frame 42 and the second right frame 44 overlaps the front edge 302 and the rear edge 303 of the fuel tank 30. Therefore, since the wide range of the second right frame 44 is disposed at a low position, a larger force can be shared by the second right frame 44.

In the vehicle rear view, the right lower frame 14 includes the extension portion 47 that extends upward from the upper end of the right connection end 46. Thereby, the extension portion 47 can further improve the rigidity between the right lower frame 14 and the down frame 12.

The tube wall thickness of the left lower frame 13 is larger than the tube wall thickness of the right lower frame 14. Therefore, the rigidity of the left lower frame 13 is increased, so that the swinging of the down frame 12 can be further suppressed.

In the vehicle side view, at least a part of the inlet 34 of the fuel tank 30 overlaps the second left frame 42 and the second right frame 44. Therefore, the swing of the down frame 12 can be suppressed by arranging the second left frame 42 and the second right frame 44 at low positions.

The fuel tank 30 is attached to the vehicle body frame 2 at the front mounting portions 32a and 32b and the rear mounting portions 33a and 33b. Accordingly, since the fuel tank 30 is attached at the front and rear portions, the force transmitted to the down frame 12 can be shared by the fuel tank 30. Thereby, the swing of the down frame 12 can be suppressed.

The rear edge 511 of the fuel supply pipe 51 is located rearward of the front edge 124 of the down frame 12 in the vehicle side view. Therefore, the distance between the fuel supply pipe 51 and the front wheel 7 can be secured without increasing the size of the straddled vehicle 1 in the longitudinal direction.

The straddled vehicle 1 includes the left reinforcing portion 48 and the right reinforcing portion 49. Therefore, the rigidity of the left and right lower frames 13 and 14 is increased by the left and right reinforcing portions 48 and 49, so that the swing of the down frame 12 can be further suppressed.

The left connection end 45 is located at the same height as the second left frame 42. Therefore, as compared with the case where the left connection end 45 is positioned higher than the second left frame 42, the position of the fuel supply pipe 51 passing above the first left frame 41 can be lowered. Thereby, the foot board 18 can be enlarged in the longitudinal direction, and the leg comfort can be improved.

The left connection end 45 is located lower than the upper edge 301 of the fuel tank 30. Therefore, the position of the fuel supply pipe 51 passing above the first left frame 41 can be lowered as compared with the case where the left connection end 45 is located higher than the upper edge 301 of the fuel tank 30. Thereby, the foot board 18 can be enlarged in the longitudinal direction, and the leg comfort can be improved.

Although an embodiment of the present invention has been described above, the present invention is not limited to the above embodiment, and various modifications can be made without departing from the scope of the invention elaborated in the claims.

The number of front wheels is not limited to one and may be two or more. The number of rear wheels is not limited to one and may be two or more. The shape and arrangement of the vehicle body cover are not limited to those in the above embodiment, and may be changed.

The shape and / or arrangement of the vehicle body frame is not limited to that of the above embodiment, and may be changed. For example, the shape and / or arrangement of the first left frame 41, the second left frame 42, the first right frame 43, or the second right frame 44 may be changed. The shape and / or arrangement of the left connection end 45 or the right connection end 46 may be changed. The shape and / or arrangement of the left reinforcing portion 48 or the right reinforcing portion 49 may be changed.

The shape and / or arrangement of the fuel tank 30 is not limited to that of the above embodiment, and may be changed. The shape and / or arrangement of the fuel supply pipe 51 is not limited to that of the above embodiment, and may be changed.

### INDUSTRIAL APPLICABILITY

According to the present invention, it is possible to effectively suppress the swing of the down frame while suppressing the vehicle from increasing in size in the longitudinal direction and improving the driver's leg comfort.

### REFERENCE SIGNS LIST

7 Front wheel
6 Front fork
11 Head pipe
12 Down frame
13 Left lower frame
14 Right lower frame
18 Foot board
30 Fuel tank
31 Tank body
32a, 32b Front mounting portion
33a, 33b Rear mounting portion
34 Inlet
41 First left frame
42 Second left frame
43 First right frame
44 Second right frame
45 Left connection end
46 Right connection end
47 Extension portion
48 Left reinforcing portion
49 Right reinforcing portion
51 fuel supply pipe

## Claims

1. A straddled vehicle (1) comprising:
a front wheel (7);
a front fork (6) that supports the front wheel (7);
a head pipe (11) that supports the front fork (6);
a down frame (12) extending downward from the head pipe (11);
a left lower frame (13) including a first left frame (41) extending leftward from the down frame (12) and a second left frame (42) extending rearward from the first left frame (41);
a right lower frame (14) including a first right frame (43) extending rightward from the down frame (12) and a second right frame (44) extending rearward from the first right frame (43);
a foot board (18) at least partially disposed between the second left frame (42) and the second right frame (44) in a vehicle plan view;
a fuel tank (30) disposed below the foot board (18), the fuel tank (30) including an inlet (34) disposed leftward of a center line of the vehicle (1) extending in a longitudinal direction of the vehicle (1) and rearward of a front edge of the first left frame (41) in the vehicle side view; and
a fuel supply pipe (51) connected to the inlet (34) of the fuel tank (30), wherein
the first left frame (41) includes a left connection end (45) connected to the down frame (12),
the first right frame (43) includes a right connection end (46) connected to the down frame (12),
in the vehicle side view, the second right frame (44) overlaps at least a part of the second left frame (42), and
in the vehicle side view, an upper edge (441) of the second right frame (44) is located lower than the upper edge (301) of the fuel tank (30), higher than the lower edge (304) of the fuel tank (30), rearward of the front edge (302) of the fuel tank (30), and forward of the rear edge (303) of the fuel tank (30),
**characterized in that**
in the vehicle side view, the fuel supply pipe (51) passes above an upper edge of the first left frame (41),
in a vehicle rear view, an upper end (451) of the left connection end (45) is located lower than a lower end (461) of the right connection end (46),
in the vehicle rear view, an angle (A2) between a right edge (122) of the down frame (12) and an upper edge (431) of the first right frame (43) is larger than an angle between a left edge (121) of the down frame (12) and the upper edge (411) of the first left frame (41), and
in the vehicle side view, an upper edge (421) of the second left frame (42) is located lower than an upper edge (301) of the fuel tank (30), higher than a lower edge (304) of the fuel tank (30), rearward of a front edge (302) of the fuel tank (30), and forward of a rear edge (303) of the fuel tank (30).

2. The straddled vehicle (1) according to claim 1, wherein
in the vehicle side view, at least a part of the second left frame (42) and the second right frame (44) overlaps with the front edge (302) and the rear edge (303) of the fuel tank (30).

3. The straddled vehicle (1) according to claim 1 or 2, wherein
in the vehicle rear view, the right lower frame (14) includes an extension portion (47) extending upward from an upper end of the right connection end (46).

4. The straddled vehicle (1) according to any of claims 1 to 3, wherein
a tube wall thickness of the left lower frame (13) is greater than a tube wall thickness of the right lower frame (14).

5. The straddled vehicle (1) according to any of claims 1 to 4, wherein
in the vehicle side view, at least a part of the inlet (34) of the fuel tank (30) overlaps the second left frame (42) and the second right frame (44).

6. The straddled vehicle (1) according to any of claims 1 to 5, wherein
the fuel tank (30) includes
a tank body (31),
a front mounting portion (32a,32b) disposed in front of the tank body (31), and
a rear mounting portion (33a,33b) disposed behind the tank body (31).

7. The straddled vehicle (1) according to any of claims 1 to 6, wherein
in the vehicle side view, a rear edge (511) of the fuel supply pipe (51) is located rearward of a front edge (124) of the down frame (12).

8. The straddled vehicle (1) according to any of claims 1 to 7, further comprising
a left reinforcement portion (48) connected to the left lower frame (13) and the down frame (12), the left reinforcement portion (48) at least partially disposed below the first left frame (41).

9. The straddled vehicle (1) according to any of claims 1 to 8, further comprising
a right reinforcement portion (49) connected to the right lower frame (14) and the down frame (12), the right reinforcement portion (49) at least partially disposed below the first right frame (43).

10. The straddled vehicle according to any of claims 1 to 9, wherein
the left connection end (45) is located at a same height as the second left frame (42).

11. The straddled vehicle according to any of claims 1 to 10, wherein
the left connection end (45) is located lower than the upper edge (301) of the fuel tank (30).

## Patentansprüche

1. Spreizsitz-Fahrzeug (1), das umfasst:
ein Vorderrad (7);
eine Vorderradgabel (6), die das Vorderrad (7) trägt;
ein Steuerrohr (11), das die Vorderradgabel (6) trägt;
einen nach unten gerichteten Rahmen (12), der sich von dem Steuerrohr (11) nach unten erstreckt;
einen linken unteren Rahmen (13), der einen ersten linken Rahmen (41), der sich von dem nach unten gerichteten Rahmen (12) nach links erstreckt, und einen zweiten linken Rahmen (42) einschließt, der sich von dem ersten linken Rahmen (41) nach hinten erstreckt;
einen rechten unteren Rahmen (14), der einen ersten rechten Rahmen (43), der sich von dem nach unten gerichteten Rahmen (12) nach rechts erstreckt, und einen zweiten rechten Rahmen (44) einschließt, der sich von dem ersten rechten Rahmen (43) nach hinten erstreckt;
ein Trittbrett (18), das in einer Fahrzeug-Draufsicht wenigstens teilweise zwischen dem zweiten linken Rahmen (42) und dem zweiten rechten Rahmen (44) angeordnet ist;
einen Kraftstofftank (30), der unter dem Trittbrett (18) angeordnet ist, wobei der Kraftstofftank (30) einen Einlass (34) enthält, der links von einer Mittellinie des Fahrzeugs (1), die sich in einer Längsrichtung des Fahrzeugs (1) erstreckt, und in der Fahrzeug-Seitenansicht hinter einer Vorderkante des ersten linken Rahmens (41) angeordnet ist; sowie
eine Kraftstoff-Zuführleitung (51), die mit dem Einlass (34) des Kraftstofftanks (30) verbunden ist, wobei
der erste linke Rahmen (41) ein linkes Verbindungsende (45) enthält, das mit dem nach unten gerichteten Rahmen (12) verbunden ist,
der erste rechte Rahmen (43) ein rechtes Verbindungsende (46) enthält, das mit dem nach unten gerichteten Rahmen (12) verbunden ist,
der zweite rechte Rahmen (44) in der Fahrzeug-Seitenansicht wenigstens einen Teil des zweiten linken Rahmens (42) überlappt, und
eine obere Kante (441) des zweiten rechten Rahmens (44) in der Fahrzeug-Seitenansicht tiefer als die obere Kante (301) des Kraftstofftanks (30), höher als die untere Kante (304) des Kraftstofftanks (30), hinter der vorderen Kante (302) des Kraftstofftanks (30) und vor der hinteren Kante (303) des Kraftstofftanks (30) liegt,
**dadurch gekennzeichnet, dass**
die Kraftstoff-Zuführleitung (51) in der Fahrzeug-Seitenansicht oberhalb einer oberen Kante des ersten linken Rahmens (41) verläuft,
ein oberes Ende (451) des linken Verbindungsendes (45) in einer Fahrzeug-Rückansicht tiefer liegt als ein unteres Ende (461) des rechten Verbindungsendes (46),
ein Winkel (A2) zwischen einer rechten Kante (122) des unteren Rahmens (12) und einer oberen Kante (431) des ersten rechten Rahmens (43) in der Fahrzeug-Rückansicht größer ist als ein Winkel zwischen einer linken Kante (121) des nach unten gerichteten Rahmens (12) und der oberen Kante (411) des ersten linken Rahmens (41), und
eine obere Kante (421) des zweiten linken Rahmens (42) in der Fahrzeug-Seitenansicht tiefer als eine obere Kante (301) des Kraftstofftanks (30), höher als eine untere Kante (304) des Kraftstofftanks (30), hinter einer vorderen Kante (302) des Kraftstofftanks (30) und vor einer hinteren Kante (303) des Kraftstofftanks (30) liegt,

2. Spreizsitz-Fahrzeug (1) nach Anspruch 1, wobei
wenigstens ein Teil des zweiten linken Rahmens (42) und des zweiten rechten Rahmens (44) sich in der Fahrzeugseitenansicht mit der vorderen Kante (302) und der hinteren Kante (303) des Kraftstofftanks (30) überlappt.

3. Spreizsitz-Fahrzeug (1) nach Anspruch 1 oder 2, wobei
der rechte untere Rahmen (14) in der Fahrzeug-Rückansicht einen Verlängerungsabschnitt (47) enthält, der sich von einem oberen Ende des rechten Verbindungsendes (46) nach oben erstreckt.

4. Spreizsitz-Fahrzeug (1) nach einem der Ansprüche 1 bis 3, wobei
eine Rohrwandstärke des linken unteren Rahmens (13) größer ist als eine Rohrwandstärke des rechten unteren Rahmens (14).

5. Spreizsitz-Fahrzeug (1) nach einem der Ansprüche 1 bis 4, wobei
wenigstens ein Teil des Einlasses (34) des Kraftstofftanks (30) in der Fahrzeug-Seitenansicht den zweiten linken Rahmen (42) und den zweiten rechten Rahmen (44) überlappt.

6. Spreizsitz-Fahrzeug (1) nach einem der Ansprüche 1 bis 5, wobei
der Kraftstofftank (30) einschließt:
einen Tank-Körper (31),
einen vorderen Anbringungsabschnitt (32a, 32b), der vor dem Tank-Körper (31) angeordnet ist, und
einen hinteren Anbringungsabschnitt (33a, 33b), der hinter dem Tank-Körper (31) angeordnet ist.

7. Spreizsitz-Fahrzeug (1) nach einem der Ansprüche 1 bis 6, wobei
eine Hinterkante (511) der Kraftstoff-Zuführleitung (51) in der Fahrzeug-Seitenansicht hinter einer vorderen Kante (124) des nach unten gerichteten Rahmens (12) liegt.

8. Spreizsitz-Fahrzeug (1) nach einem der Ansprüche 1 bis 7, das des Weiteren
einen linken Verstärkungsabschnitt (48) umfasst, der mit dem linken unteren Rahmen (13) und dem nach unten gerichteten Rahmen (12) verbunden ist, wobei der linke Verstärkungsabschnitt (48) wenigstens teilweise unterhalb des ersten linken Rahmens (41) angeordnet ist.

9. Spreizsitz-Fahrzeug (1) nach einem der Ansprüche 1 bis 8, das des Weiteren
einen rechten Verstärkungsabschnitt (49) umfasst, der mit dem rechten unteren Rahmen (14) und dem nach unten gerichteten Rahmen (12) verbunden ist, wobei der rechte Verstärkungsabschnitt (49) wenigstens teilweise unterhalb des ersten rechten Rahmens (43) angeordnet ist.

10. Spreizsitz-Fahrzeug nach einem der Ansprüche 1 bis 9, wobei
das linke Verbindungsende (45) auf gleicher Höhe liegt wie der zweite linke Rahmen (42).

11. Spreizsitz-Fahrzeug nach einem der Ansprüche 1 bis 10, wobei
das linke Verbindungsende (45) tiefer liegt als die obere Kante (301) des Kraftstofftanks (30).

## Revendications

1. Véhicule à enfourcher (1) comprenant :
une roue avant (7) ;
une fourche avant (6) qui supporte la roue avant (7) ;
un tuyau de tête (11) qui supporte la fourche avant (6) ;
un châssis bas (12) s'étendant vers le bas depuis le tuyau de tête (11) ;
un châssis inférieur gauche (13) comprenant un premier châssis gauche (41) s'étendant vers la gauche depuis le châssis bas (12) et un second châssis gauche (42) s'étendant vers l'arrière depuis le premier châssis gauche (41) ;
un châssis inférieur droit (14) comprenant un premier châssis droit (43) s'étendant vers la droite depuis le châssis bas (12) et un second châssis droit (44) s'étendant vers l'arrière depuis le premier châssis droit (43) ;
un repose-pied (18) au moins partiellement disposé entre le second châssis gauche (42) et le second châssis droit (44) sur une vue en plan du véhicule ;
un réservoir de carburant (30) disposé sous le repose-pied (18), le réservoir de carburant (30) comprenant une entrée (34) disposée vers la gauche d'une ligne centrale du véhicule (1) s'étendant dans une direction longitudinale du véhicule (1) et
vers l'arrière d'un bord avant du premier châssis gauche (41) sur la vue latérale du véhicule ; et
un tuyau d'alimentation en carburant (51) connecté à l'entrée (34) du réservoir de carburant (30), dans lequel
le premier châssis gauche (41) comprend une extrémité de connexion gauche (45) connectée au châssis bas (12),
le premier châssis droit (43) comprend une extrémité de connexion droite (46) connectée au châssis bas (12),
sur la vue latérale du véhicule, le second châssis droit (44) chevauche au moins une partie du second châssis gauche (42), et
sur la vue latérale du véhicule, un bord supérieur (441) du second châssis droit (44) est situé plus bas que le bord supérieur (301) du réservoir de carburant (30), plus haut que le bord inférieur (304) du réservoir de carburant (30), en arrière du bord avant (302) du réservoir de carburant (30), et en avant du bord arrière (303) du réservoir de carburant (30),
**caractérisé en ce que**
sur la vue latérale du véhicule, le tuyau d'alimentation en carburant (51) passe au-dessus d'un bord supérieur du premier châssis gauche (41),
sur une vue arrière du véhicule, une extrémité supérieure (451) de l'extrémité de connexion gauche (45) est située plus bas qu'une extrémité inférieure (461) de l'extrémité de connexion droite (46),
sur la vue arrière du véhicule, un angle (A2) entre un bord droit (122) du châssis bas (12) et un bord supérieur (431) du premier châssis droit (43) est plus grand qu'un angle entre un bord gauche (121) du châssis bas (12) et le bord supérieur (411) du premier châssis gauche (41), et
sur la vue latérale du véhicule, un bord supérieur (421) du second châssis gauche (42) est situé plus bas qu'un bord supérieur (301) du réservoir de carburant (30), plus haut qu'un bord inférieur (304) du réservoir de carburant (30), en arrière d'un bord avant (302) du réservoir de carburant (30), et en avant d'un bord arrière (303) du réservoir de carburant (30).

2. Véhicule à enfourcher (1) selon la revendication 1, dans lequel sur la vue latérale du véhicule, au moins une partie du second châssis gauche (42) et du second châssis droit (44) chevauche le bord avant (302) et le bord arrière (303) du réservoir de carburant (30).

3. Véhicule à enfourcher (1) selon la revendication 1 ou 2, dans lequel sur la vue arrière du véhicule, le châssis inférieur droit (14) comprend une partie d'extension (47) s'étendant vers le haut depuis une extrémité supérieure de l'extrémité de connexion droite (46).

4. Véhicule à enfourcher (1) selon l'une quelconque des revendications 1 à 3, dans lequel
une épaisseur de paroi de tube du châssis inférieur gauche (13) est supérieure à une épaisseur de paroi de tube du châssis inférieur droit (14).

5. Véhicule à enfourcher (1) selon l'une quelconque des revendications 1 à 4, dans lequel
sur la vue latérale du véhicule, au moins une partie de l'entrée (34) du réservoir de carburant (30) chevauche le second châssis gauche (42) et le second châssis droit (44).

6. Véhicule à enfourcher (1) selon l'une quelconque des revendications 1 à 5, dans lequel
le réservoir de carburant (30) comprend
un corps de réservoir (31),
une partie de montage avant (32a, 32b) disposée à l'avant du corps de réservoir (31), et
une partie de montage arrière (33a, 33b) disposée derrière le corps de réservoir (31).

7. Véhicule à enfourcher (1) selon l'une quelconque des revendications 1 à 6, dans lequel
sur la vue latérale du véhicule, un bord arrière (511) du tuyau d'alimentation en carburant (51) est situé à l'arrière d'un bord avant (124) du châssis bas (12).

8. Véhicule à enfourcher (1) selon l'une quelconque des revendications 1 à 7, comprenant en outre
une partie de renforcement gauche (48) connectée au châssis inférieur gauche (13) et au châssis bas (12), la partie de renforcement gauche (48) étant au moins partiellement disposée sous le premier châssis gauche (41).

9. Véhicule à enfourcher (1) selon l'une quelconque des revendications 1 à 8, comprenant en outre
une partie de renforcement droite (49) connectée au châssis inférieur droit (14) et au châssis bas (12), la partie de renforcement droite (49) étant au moins partiellement disposée sous le premier châssis droit (43).

10. Véhicule à enfourcher selon l'une quelconque des revendications 1 à 9, dans lequel l'extrémité de connexion gauche (45) est située à la même hauteur que le second châssis gauche (42).

11. Véhicule à enfourcher selon l'une quelconque des revendications 1 à 10, dans lequel
l'extrémité de connexion gauche (45) est située plus bas que le bord supérieur (301) du réservoir de carburant (30).
